# EUROPEAN PATENT APPLICATION

(11) **EP 3 051 889 A1**
(43) Date of publication of application: **03.08.2016**
(21) Application number: 14849873.6
(22) Date of filing: 17.06.2014
(51) Int. Cl.: H04W 52/14

(54) **UPLINK POWER EXTRACTION PROCESSING METHOD AND DEVICE, TERMINAL AND BASE STATION**

(30) Priority: 26.09.2013 CN 201310446432
(71) Applicant: ZTE Corporation, Shenzhen City, Guangdong Province 518057 (CN)
(72) Inventor: CHEN, Zewei, Shenzhen Guangdong Province 518057 (CN); DAI, Bo, Shenzhen Guangdong Province 518057 (CN); XIA, Shuqiang, Shenzhen Guangdong Province 518057 (CN); GUO, Senbao, Shenzhen Guangdong Province 518057 (CN); SUN, Yunfeng, Shenzhen Guangdong Province 518057 (CN); LI, Yu Ngok, Shenzhen Guangdong Province 518057 (CN)
(74) Representative: Novagraaf Technologies
(86) International application number: PCT/CN2014/080150
(87) International publication number: WO 2015/043246

(57) **Abstract**

A processing method and device for reducing uplink power, UE and an Evolved eNodeB are provided. The uplink power reduction processing method is applied to a scenario where a plurality of Uplink Control Information (UCI) are transmitted on different uplink Component Carriers (CCs) of the same subframe, and the method includes: it is determined that the sum of power of the uplink CCs exceeds a transmission power threshold of UE; and uplink power of the UE is reduced according to a preset power reduction rule. By the present invention, a problem about uplink power control for transmission of the plurality of UCI on different carriers of the same subframe is solved, and the effects of providing different protection for different data requirements and effectively controlling the uplink power are further achieved.

## Description

### Technical Field

The present invention relates to the field of communication, and in particular to a processing method and device for reducing uplink power, UE and eNodeB.

### Background

Long-Term Evolution Advance (LTE-A) is an evolved release of LTE, is intended to meet a higher requirement of the wireless communication market in the next few years, implement more applications and meet and exceed a requirement of International Mobile Telecommunications-Advanced (IMT-A), and also maintains higher backward compatibility with LTE.

In order to meet such a requirement, LTE-A adopts a Carrier Aggregation (CA) technology for supporting a communication bandwidth more than that of LTE. A main principle of CA is to aggregate multiple carriers backwards compatible with LTE to support a maximum bandwidth of 100MHz. CA may be divided into two application scenarios, i.e. inter-band CA and intra-band CA.

In a system introduced with CA, an aggregated carrier is called a Component Carrier (CC), and is also called a cell. In addition, concepts of Primary Component Carrier/Cell (PCC/PCell) and Secondary Component Carrier/Cell (PSCC/SCell) are also disclosed. A system supporting CA at least includes a PCC and an SCC, wherein the PCC is in an activated state all the time.

Due to introduction of a CA technology, multiple Physical Uplink Shared Channels (PUSCHs) may be transmitted in parallel on different CCs, and PUSCHs and Physical Uplink Control Channels (PUCCHs) may also be simultaneously transmitted on the same or different CCs.

In LTE and LTE-A systems, Uplink Control Information (UCI) includes Acknowledgement/Negative Acknowledgement (ACK/NACK) for downlink transmission, downlink physical Channel State Information (CSI) and an uplink Scheduling Request (RS). UCI may support five downlink CCs. According to a Release 11 (R11) LTE standard 36.213 (36.213, Physical layer procedures Release 11), uplink transmission multiplexing rules for UCI are partially summarized as follows:
all UCI multiplexed on a PUCCH is only transmitted on a PCC of a PCell;
when simultaneous transmission of a PUCCH and a PUSCH is not supported and at least one PUSCH is transmitted, UCI is multiplexed on the PUSCH; Periodic CSI (P-CSI) and/or ACK/NACK are/is usually transmitted on a PUSCH of a PCC; if there exists a PUSCH of an SCC rather than a PUSCH of a PCC, UCI is multiplexed on the PUSCH of the SCC; if there are PUSCHs of multiple SCCs on a subframe, P-CSI and/or ACK/NACK are/is transmitted on the PUSCH of the SCC with the smallest cell index;
when simultaneous transmission of a PUCCH and a PUSCH is supported and at least one PUSCH is transmitted, ACK/NACK is transmitted on the PUCCH; P-CSI is usually transmitted on a PUSCH of a PCC, and if there exists a PUSCH of an SCC rather than a PUSCH of a PCC, P-CSI is multiplexed on the PUSCH of the SCC; and if there are PUSCHs of multiple SCCs, P-CSI is transmitted on the PUSCH of the SCC with the smallest cell index.

Under limits of the abovementioned UCI multiplexing rules, UCI of an eNodeB may be multiplexed on an uplink CC of another eNodeB, and then the uplink CC of the other eNodeB transmits the UCI to the eNodeB through a backhaul between the eNodeBs.

In a system supporting CA, uplink power control is performed on the basis of the abovementioned UCI multiplexing rules. An eNodeB performs uplink scheduling according to Power Headroom Reporting (PHR) of UE, and allocates an uplink transmission resource, a Modulation and Coding Scheme (MCS) and transmission power to each CC. However, the sum of the transmission power of each CC also probably exceeds maximum total transmission power allowed by the UE. Under such a condition, the UE is required to perform power reduction.

According to an R11 LTE standard 36.213, when a PUCCH is transmitted together with a PUSCH which does not bear any UCI, if total transmission power of UE exceeds maximum transmission power, transmission power of the PUSCH of each CC is reduced according to the same scale factor. When a PUSCH which bears UCI is transmitted on a certain cell and a PUSCH which does not bear any UCI is transmitted on another cell, if the total transmission power of the UE exceeds the maximum transmission power, power reduction is performed on the PUSCH, which does not bear any UCI, of each carrier according to the same scale factor. When a PUSCH which bears UCI and a PUCCH are simultaneously transmitted on a certain cell and a PUSCH which does not bear any UCI is transmitted on another cell, if the total transmission power of the UE exceeds the maximum transmission power, required power is allocated to the PUCCH at first; if there is power left, the power is allocated to the PUSCH which bears the UCI; and if there is still power left, power reduction is performed on the PUSCH, which does not bear any UCI, of each carrier according to the same scale factor, and the reduced power does not exceed the left power.

The abovementioned uplink power reduction control method is designed for existing UCI multiplexing rules of a CA system. For a double link, a backhaul between eNodeBs is non-ideal and long in time delay. UCI of different eNodeBs is required to be independently transmitted to the corresponding eNodeBs respectively, so that UCI multiplexing rules are different from the existing multiplexing rules of the CA system. For example, UCI (ACK/NACK, or CSI, or SRs) of different eNodeBs may be simultaneously sent on CCs of the corresponding eNodeBs, and the UCI may be multiplexed on two PUCCHs or PUSCHs of different eNodeBs in the same subframe or transmitted in another channel combination form different from that specified by the existing UCI multiplexing rules.

For uplink transmission not following the existing UCI multiplexing rules of the CA system in a double link, if total power of different CCs exceeds maximum total transmission power allowed by UE, reduction according to the multiplexing rules is inapplicable.

Therefore, there is yet no corresponding solution to how to perform power reduction in a scenario to which the abovementioned UCI multiplexing rules are inapplicable, for example, an uplink transmission scenario in which a plurality of UCI are simultaneously transmitted on different carriers of the same subframe, in the related technology.

### Summary

The present invention provides a processing method and device for reducing uplink power, UE and an eNodeB, so as to at least solve the problem of how to perform power reduction in an uplink transmission scenario where UCI is simultaneously transmitted on different carriers of the same subframe in the related technology.

According to one aspect of the present invention, a processing method for reducing uplink power is provided, which may be applied to a scenario where a plurality of UCI are transmitted on different uplink CCs of the same subframe, including that: it is determined that the sum of power of the uplink CCs exceeds a transmission power threshold of UE; and uplink power of the UE is reduced according to a preset power reduction rule.

Wherein, under the condition that ACKs/NACKs for downlink transmission are transmitted on at least two CCs, the preset power reduction rule may be a first power reduction rule, wherein the first power reduction rule may include at least one of the following rules that: power reduction priorities are determined according to bit numbers of the ACKs/NACKs; the power reduction priorities are determined according to transmission power of the ACKs/NACKs; the power reduction priorities are determined according to reporting manners of the ACKs/NACKs; the power reduction priorities are determined according to CC indexes of the CCs with the NACKs/NACKs; and the power reduction priorities are determined according to CC types of the CCs with the ACKs/NACKs.

Wherein, the rule that the power reduction priorities are determined according to the bit numbers of the ACKs/NACKs and/or the transmission power of the ACKs/NACKs may include at least one of the following rules that: power reduction is preferably performed on the ACKs/NACKs with smaller bit numbers; power reduction is preferably performed on the ACKs/NACKs with larger bit numbers; power reduction is performed on the ACKs/NACKs with the same bit number according to the same scale factor; power reduction is preferably performed on the ACKs/NACKs with higher transmission power; power reduction is preferably performed on the ACKs/NACKs with lower transmission power; power reduction is performed on the ACKs/NACKs with the same transmission power according to the same scale factor; power reduction is preferably performed on the ACKs/NACKs with higher transmission power per bit, wherein the transmission power per bit is obtained by dividing the transmission power of the ACKs/NACKs by the bit numbers of the ACKs/NACKs; and power reduction is preferably performed on the ACKs/NACKs with lower transmission power per bit.

Wherein, the rule that the power reduction priorities are determined according to the reporting manners of the ACKs/NACKs may include at least one of the following rules that: the power reduction priorities are sequentially arranged from high to low as follows: PUCCH format 1a, PUCCH format 1b, PUCCH format 1b with channel selection and PUCCH format 3; and the power reduction priorities are sequentially arranged from high to low as follows: PUCCH format 3, PUCCH format 1b with channel selection, PUCCH format 1 b and PUCCH format 1 a.

Wherein, the rule that the power reduction priorities are determined according to the CC indexes of the CCs with the ACKs/NACKs may include at least one of the following rules that: power reduction is preferably performed on the ACKs/NACKs corresponding to large CC indexes; power reduction is preferably performed on the ACKs/NACKs corresponding to small CC indexes; and power reduction is performed on the ACKs/NACKs corresponding to the same CC index according to the same scale factor.

Wherein, the rule that the power reduction priorities are determined according to the CC types of the CCs with the ACKs/NACKs may include at least one of the following rules that: power reduction is preferably performed on the ACKs/NACKs of an SCell; power reduction is preferably performed on the ACKs/NACKs of a cell which accesses the UE later; and power reduction is preferably performed on the ACKs/NACKs of a cell which accesses the UE earlier.

Wherein, under the condition that downlink physical CSI is transmitted on at least two CCs, the preset power reduction rule may be a second power reduction rule, wherein the second power reduction rule may include at least one of the following rules that: power reduction priorities are determined according to the specification that priorities of CSI are removed when a PUCCH is transmitted only on a PCC and a plurality of CSI are simultaneously transmitted on the same subframe; the power reduction priorities are determined according to bit numbers of the CSI; and the power reduction priorities are determined according to transmission power of the CSI.

Wherein, the rule that the power reduction priorities are determined according to the bit numbers of the CSI and/or the transmission power of the CSI may include at least one of the following rules that: power reduction is preferably performed on the CSI with smaller bit numbers; power reduction is preferably performed on the CSI with larger bit numbers; power reduction is performed on the CSI with the same bit number according to the same scale factor; power reduction is preferably performed on the CSI with higher transmission power; power reduction is preferably performed on the CSI with lower transmission power; power reduction is performed on the CSI with the same transmission power according to the same scale factor; power reduction is preferably performed on the CSI with higher transmission power per CSI bit, wherein the transmission power per CSI bit is obtained by dividing the transmission power of the CSI by the bit numbers of the CSI; and power reduction is preferably performed on the CSI with lower transmission power per CSI bit.

Wherein, under the condition that uplink SRs are transmitted on at least two CCs, the preset power reduction rule may be a third power reduction rule, wherein the third power reduction rule may include at least one of the following rules that: power reduction priorities are determined according to CC indexes of the CCs with the SRs; the power reduction priorities are determined according to transmission power of the SRs; and when the SRs are transmitted as Media Access Control (MAC) Protocol Data Units (PDUs), the power reduction priorities of the SRs are higher than those of SRs transmitted in a first different form, wherein the first different form is an SR transmission form except the form that the SRs are transmitted as the MAC PDUs.

Wherein, the rule that the power reduction priorities are determined according to the CC indexes of the CCs with the SRs may include at least one of the following rules that: power reduction is preferably performed on the SRs corresponding to large CC indexes; power reduction is preferably performed on the SRs corresponding to small CC indexes; and power reduction is performed on the SRs corresponding to the same CC index according to the same scale factor.

Wherein, the rule that the power reduction priorities are determined according to the transmission power of the SRs may include at least one of the following rules that: power reduction is preferably performed on the SRs with higher transmission power; power reduction is preferably performed on the SRs with lower transmission power; and power reduction is performed on the SRs with the same transmission power according to the same scale factor.

Wherein, under the condition that an ACK/NACK is transmitted on at least one CC and an uplink SR is transmitted on at least one CC, the preset power reduction rule may be a fourth power reduction rule, wherein the fourth power reduction rule may include at least one of the following rules that: power reduction priorities of the ACK/NACK and the SR are determined according to a bit number of the ACK/NACK; power reduction is preferably performed on the one with higher transmission power in transmission power of the ACK/NACK and transmission power of the SR; power reduction is preferably performed on the one with lower transmission power in the transmission power of the ACK/NACK and the transmission power of the SR; power reduction is preferably performed on the one with higher transmission power per bit in transmission power per bit of the ACK/NACK and transmission power per bit of the SR, wherein the transmission power per bit of the ACK/NACK is obtained by dividing the transmission power of the ACK/NACK by the bit number of the ACK/NACK, and the transmission power per bit of the SR is obtained by dividing the transmission power by the bit number of the SR of the SR; power reduction is preferably performed on the one with lower transmission power per bit in the transmission power per bit of the ACK/NACK and the transmission power per bit of the SR; the power reduction priority of the ACK/NACK is the same as the power reduction priority of the SR; the power reduction priority of the ACK/NACK is higher than the power reduction priority of the SR; the power reduction priority of the ACK/NACK is lower than the power reduction priority of the SR; when the SR is transmitted jointly with the ACK/NACK on a PUCCH, the power reduction priority of the SR is lower than that of an SR transmitted in a second different form, wherein the second different form is an SR transmission form except the form that the SR is transmitted jointly with the ACK/NACK on the PUCCH; and when the ACK/NACK is transmitted jointly with the SR on the PUCCH, the power reduction priority of the ACK/NACK is lower than that of an ACK/NACK which is independently transmitted and has the same bits.

Wherein, the rule that the power reduction priorities of the ACK/NACK and the SR are determined according to the uncoded bit number of the ACK/NACK may include at least one of the following rules that: when the bit number of the ACK/NACK is not more than a preset number M1, the power reduction priority of the ACK/NACK is not lower than the power reduction priority of the SR, wherein M1 is an integer more than or equal to 0; when the bit number of the ACK/NACK is more than the preset number M1, the power reduction priority of the ACK/NACK is lower than the power reduction priority of the SR; when the bit number of the ACK/NACK is not more than the preset number M1, the power reduction priority of the ACK/NACK is not higher than the power reduction priority of the SR, wherein M1 is an integer more than or equal to 0; and when the bit number of the ACK/NACK is more than the preset number M1, the power reduction priority of the ACK/NACK is higher than the power reduction priority of the SR.

Wherein, under the condition that uplink transmission of the UE includes at least one of: a Physical Random Access Channel (PRACH), UCI, a Sounding Reference Signal (SRS) and uplink data, the preset power reduction rule may be a fifth power reduction rule, wherein the UCI may include at least one of: downlink physical CSI, an ACK/NACK for downlink transmission and an uplink SR, and the fifth power reduction rule may include at least one of the following rules that: power reduction priorities are sequentially arranged from high to low as follows: the SRS, the data, the CSI, the ACK/NACK and the PRACH; the power reduction priorities are sequentially arranged from high to low as follows: the SRS, the data, the CSI, the SR and the PRACH; the power reduction priorities are sequentially arranged from high to low as follows: the SRS, the data, the CSI, the PRACH and the ACK/NACK; and the power reduction priorities are sequentially arranged from high to low as follows: the SRS, the data, the CSI, the PRACH and the SR.

Wherein, under the condition that a plurality of UCI are simultaneously transmitted on the same channel, the lowest power reduction priority in power reduction priorities corresponding to the a plurality of UCI may be determined as a power reduction priority of the a plurality of UCI, or, the highest power reduction priority in the power reduction priorities corresponding to the a plurality of UCI may be determined as the power reduction priority of the a plurality of UCI.

Wherein, before the step that the uplink power of the UE is reduced according to the preset power reduction rule, the method may further include that: whether transmission of the UCI is at least one of the following scenarios or not is judged: at least two PUCCHs are transmitted and a PUSCH which bears UCI is not transmitted, at least two PUSCHs which bear UCI are transmitted and a PUCCH is not transmitted, and at least one PUCCH is transmitted and at least one PUSCH with UCI is transmitted; and under the condition that a judgment result is YES, the uplink power of the UE is reduced according to the preset power reduction rule.

Wherein, the step that the uplink power of the UE is reduced according to the preset power reduction rule may include at least one of: discarding without sending, reduction of transmission power, partial reduction of bit numbers and reduction of an allocated uplink resource.

Wherein, under the condition of the same power reduction priority, the step that the uplink power of the UE is reduced according to the preset power reduction rule may include at least one of the following operation that: an ACK/NACK is preferably reduced in a manner of discarding without sending; CSI is preferably reduced in a manner of reducing transmission power to scale; an SR is preferably reduced in the manner of reducing transmission power to scale; and the ACK/NACK, the CSI and the SR are preferably reduced in the manner of reducing the transmission power to scale.

According to another aspect of the present invention, a processing method for reducing uplink power is provided, which may be applied to a scenario where a plurality of UCI are transmitted on different uplink CCs of the same subframe, including that: uplink data sent by UE is received, wherein the uplink data may be uplink data obtained after the UE reduces uplink power of the UE according to a preset power reduction rule; and the uplink data is detected in an uplink transmission format, wherein the uplink transmission format may include a first uplink transmission format preset by the UE and one or more second uplink transmission formats except the first uplink transmission format.

Wherein, the step that the uplink data is detected in the uplink transmission format may include that: the uplink data is detected in the first uplink transmission format; under the condition that the uplink data is successfully detected in the first uplink transmission format, detection is ended; and/or, under the condition that the uplink data is failed to be detected in the first uplink transmission format, the uplink data is detected in the one or more second uplink transmission formats until detection succeeds.

According to another aspect of the present invention, a processing device for reducing unlink power is provided, which may be applied to a scenario where a plurality of UCI are transmitted on different uplink CCs of the same subframe, including: a determination module, configured to determine that the sum of power of the uplink CCs exceeds a transmission power threshold of UE; and a reduction module, configured to reduce uplink power of the UE according to a preset power reduction rule.

Wherein, the device may further include: a judgment module, configured to judge whether transmission of the UCI is at least one of the following scenarios or not: at least two PUCCHs are transmitted and a PUSCH which bears UCI is not transmitted, at least two PUSCHs which bear UCI are transmitted and a PUCCH is not transmitted, and at least one PUCCH is transmitted and at least one PUSCH with UCI is transmitted; and the reduction module may further be configured to, under the condition that a judgment result of the judgment module is YES, reduce the uplink power of the UE according to the preset power reduction rule.

According to another aspect of the present invention, UE is provided, which may include the device mentioned in any one of the abovementioned items.

According to another aspect of the present invention, a processing device for reducing unlink power is provided, which may be applied to a scenario where a plurality of UCI are transmitted on different uplink CCs of the same subframe, including: a receiving module, configured to receive uplink data sent by UE, wherein the uplink data may be uplink data obtained after the UE reduces uplink power of the UE according to a preset power reduction rule; and a detection module, configured to detect the uplink data in an uplink transmission format, wherein the uplink transmission format may include a first uplink transmission format preset by the UE and one or more second uplink transmission formats except the first uplink transmission format.

Wherein, the detection module may include: a first detection unit, configured to detect the uplink data in the first uplink transmission format; an ending unit, configured to, under the condition that the uplink data is successfully detected in the first uplink transmission format, end detection; and/or, a second detection unit, configured to, under the condition that the uplink data is failed to be detected in the first uplink transmission format, detect the uplink data in the one or more second uplink transmission formats until detection succeeds.

According to another aspect of the present invention, an eNodeB is provided, which may include the device mentioned in any one of the abovementioned items.

According to the present invention, the uplink power reduction processing method is applied to the scenario where the a plurality of UCI are transmitted on different uplink CCs of the same subframe, and includes that: it is determined that the sum of the power of the uplink CCs exceeds the transmission power threshold of the UE; and the uplink power of the UE is reduced according to the preset power reduction rule, so that a problem about uplink power control for transmission of the a plurality of UCI on different carriers of the same subframe is solved, and the effects of providing different protection for different data requirements and effectively controlling the uplink power are further achieved.

### Brief Description of the Drawings

The drawings described here are adopted to provide further understanding of the present invention, and form a part of the present invention. Schematic embodiments of the present invention and description thereof are adopted to explain the present invention and not intended to form improper limits to the present invention. In the drawings:
Fig. 1 is a flowchart of a first uplink power reduction processing method according to an embodiment of the present invention;
Fig. 2 is a flowchart of a second uplink power reduction processing method according to an embodiment of the present invention;
Fig. 3 is a structure diagram of a first uplink power reduction processing device according to an embodiment of the present invention;
Fig. 4 is a preferred structure diagram of a first uplink power reduction processing device according to an embodiment of the present invention;
Fig. 5 is a structure diagram of UE according to an embodiment of the present invention;
Fig. 6 is a structure diagram of a second uplink power reduction processing device according to an embodiment of the present invention;
Fig. 7 is a preferred structure diagram of a detection module 64 in a second uplink power reduction processing device according to an embodiment of the present invention;
Fig. 8 is a structure diagram of eNodeB according to an embodiment of the present invention;
Fig. 9 is a flowchart of a first uplink power reduction control method according to a preferred embodiment of the present invention; and
Fig. 10 is a flowchart of a second uplink power reduction control processing method according to a preferred embodiment of the present invention.

### Detailed Description of the Embodiments

The present invention will be described below with reference to the drawings and embodiments in detail. It is important to note that the embodiments in the present invention and characteristics in the embodiments may be combined under the condition of no conflicts.

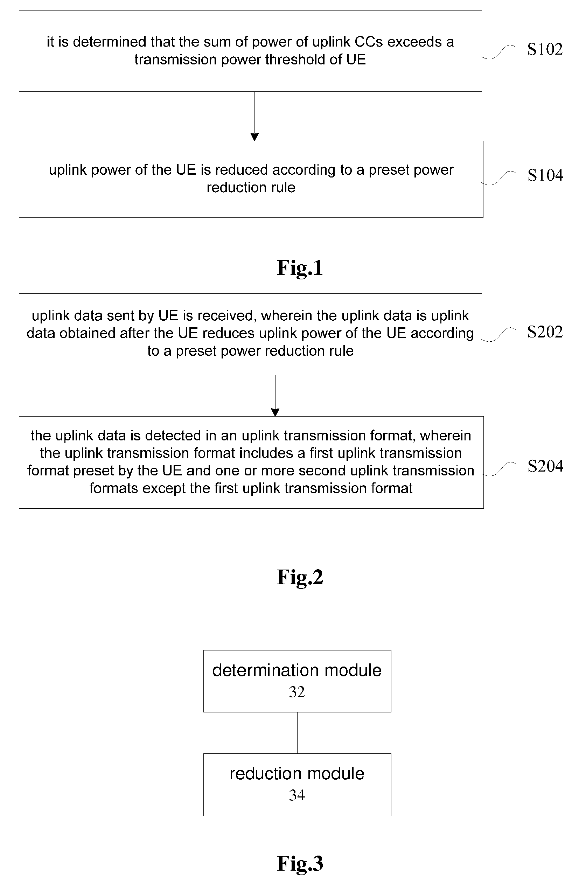

The embodiment provides a processing method for reducing uplink power, which is applied to a scenario where a plurality of UCI are transmitted on different uplink CCs of the same subframe. Fig. 1 is a flowchart of a first uplink power reduction processing method according to an embodiment of the present invention, and as shown in Fig. 1, the flow includes the following steps:
Step 102: it is determined that the sum of power of the uplink CCs exceeds a transmission power threshold of UE; and
Step 104: uplink power of the UE is reduced according to a preset power reduction rule.

By the steps, in the scenario where the a plurality of UCI are transmitted on different uplink CCs (or cells) of the same subframe, the preset power reduction rule is set for the UE, and the UE performs corresponding uplink power reduction processing according to the rule, so that a problem about uplink power control for transmission of the a plurality of UCI on different carriers of the same subframe is solved, and the effects of providing different protection for different data requirements and effectively controlling the uplink power are further achieved.

It is important to note that there may be multiple kinds of preset power reduction rules, power reduction priorities are correspondingly different for different transmission scenarios, and the power reduction priorities of each piece of UCI are described below, wherein power reduction is preferably performed on the UCI corresponding to higher power reduction priorities, that is, the UCI is not preferably sent, and power reduction is preferably not performed on the UCI corresponding to lower power reduction priorities, that is, the UCI is preferably sent. Power reduction priorities corresponding to five different power reduction rules for five different application scenarios will be described below respectively.

For example, under the condition that ACKs/NACKs for downlink transmission are transmitted on at least two CCs, the preset power reduction rule is a first power reduction rule, wherein the first power reduction rule may include multiple rules, and for example, may include at least one of the following rules that: power reduction priorities are determined according to bit numbers of the ACKs/NACKs; the power reduction priorities are determined according to transmission power of the ACKs/NACKs; the power reduction priorities are determined according to reporting manners of the ACKs/NACKs; the power reduction priorities are determined according to CC indexes of the CCs with the NACKs/NACKs; and the power reduction priorities are determined according to CC types of the CCs with the ACKs/NACKs.

Wherein, the rule that the power reduction priorities are determined according to the bit numbers of the ACKs/NACKs and/or the transmission power of the ACKs/NACKs may also include multiple rules, and for example, may include at least one of the following rules that: power reduction is preferably performed on the ACKs/NACKs with smaller bit numbers; power reduction is preferably performed on the ACKs/NACKs with larger bit numbers; power reduction is performed on the ACKs/NACKs with the same bit number according to the same scale factor; power reduction is preferably performed on the ACKs/NACKs with higher transmission power; power reduction is preferably performed on the ACKs/NACKs with lower transmission power; power reduction is performed on the ACKs/NACKs with the same transmission power according to the same scale factor; power reduction is preferably performed on the ACKs/NACKs with higher transmission power per bit, wherein the transmission power per bit is obtained by dividing the transmission power of the ACKs/NACKs by the bit numbers of the ACKs/NACKs; and power reduction is preferably performed on the ACKs/NACKs with lower transmission power per bit.

Wherein, the rule that the power reduction priorities are determined according to the reporting manners of the ACKs/NACKs may also include multiple rules, and for example, may include at least one of the following rules that: the power reduction priorities are sequentially arranged from high to low as follows: PUCCH format 1a, PUCCH format 1 b, PUCCH format 1 b with channel selection and PUCCH format 3; and the power reduction priorities are sequentially arranged from high to low as follows: PUCCH format 3, PUCCH format 1 b with channel selection, PUCCH format 1 b and PUCCH format 1 a.

Wherein, the rule that the power reduction priorities are determined according to the CC indexes of the CCs with the ACKs/NACKs may also include multiple rules, and for example, may include at least one of the following rules that: power reduction is preferably performed on the ACKs/NACKs corresponding to large CC indexes; power reduction is preferably performed on the ACKs/NACKs corresponding to small CC indexes; and power reduction is performed on the ACKs/NACKs corresponding to the same CC index according to the same scale factor.

Wherein, the rule that the power reduction priorities are determined according to the CC types of the CCs with the ACKs/NACKs may also include multiple rules, and for example, may include at least one of the following rules that: power reduction is preferably performed on the ACKs/NACKs of an SCell; power reduction is preferably performed on the ACKs/NACKs of a cell which accesses the UE later; and power reduction is preferably performed on the ACKs/NACKs of a cell which accesses the UE earlier.

Under the condition that downlink physical CSI is transmitted on at least two CCs, the preset power reduction rule is a second power reduction rule, wherein the second power reduction rule may include at least one of the following rules that: power reduction priorities are determined according to the specification that priorities of CSI are removed when a PUCCH is transmitted only on a PCC and a plurality of CSI are simultaneously transmitted on the same subframe; the power reduction priorities are determined according to bit numbers of the CSI; and the power reduction priorities are determined according to transmission power of the CSI.

Wherein, the rule that the power reduction priorities are determined according to the bit numbers of the CSI and/or the transmission power of the CSI includes at least one of the following rules that: power reduction is preferably performed on the CSI with smaller bit numbers; power reduction is preferably performed on the CSI with larger bit numbers; power reduction is performed on the CSI with the same bit number according to the same scale factor; power reduction is preferably performed on the CSI with higher transmission power; power reduction is preferably performed on the CSI with lower transmission power; power reduction is performed on the CSI with the same transmission power according to the same scale factor; power reduction is preferably performed on the CSI with higher transmission power per CSI bit, wherein the transmission power per CSI bit is obtained by dividing the transmission power of the CSI by the bit numbers of the CSI; and power reduction is preferably performed on the CSI with lower transmission power per CSI bit.

Under the condition that uplink SRs are transmitted on at least two CCs, the preset power reduction rule is a third power reduction rule, wherein the third power reduction rule includes at least one of the following rules that: power reduction priorities are determined according to CC indexes of the CCs with the SRs; the power reduction priorities are determined according to transmission power of the SRs; and when the SRs are transmitted as MAC PDUs, the power reduction priorities of the SRs are higher than those of SRs transmitted in a first different form, wherein the first different form is an SR transmission form except the form that the SRs are transmitted as the MAC PDUs.

Wherein, the rule that the power reduction priorities are determined according to the CC indexes of the CCs with the SRs includes at least one of the following rules that: power reduction is preferably performed on the SRs corresponding to large CC indexes; power reduction is preferably performed on the SRs corresponding to small CC indexes; and power reduction is performed on the SRs corresponding to the same CC index according to the same scale factor.

Wherein, the rule that the power reduction priorities are determined according to the transmission power of the SRs includes at least one of the following rules that: power reduction is preferably performed on the SRs with higher transmission power; power reduction is preferably performed on the SRs with lower transmission power; and power reduction is performed on the SRs with the same transmission power according to the same scale factor.

Wherein, under the condition that an ACK/NACK is transmitted on at least one CC and an uplink SR is transmitted on at least one CC, the preset power reduction rule is a fourth power reduction rule, wherein the fourth power reduction rule includes at least one of the following rules that: power reduction priorities of the ACK/NACK and the SR are determined according to a bit number of the ACK/NACK; power reduction is preferably performed on the one with higher transmission power in transmission power of the ACK/NACK and transmission power of the SR; power reduction is preferably performed on the one with lower transmission power in the transmission power of the ACK/NACK and the transmission power of the SR; power reduction is preferably performed on the one with higher transmission power per bit in transmission power per bit of the ACK/NACK and transmission power per bit of the SR, wherein the transmission power per bit of the ACK/NACK is obtained by dividing the transmission power of the ACK/NACK by the bit number of the ACK/NACK, and the transmission power per bit of the SR is obtained by dividing the transmission power of the SR by the bit number of the SR; power reduction is preferably performed on the one with lower transmission power per bit in the transmission power per bit of the ACK/NACK and the transmission power per bit of the SR; the power reduction priority of the ACK/NACK is the same as the power reduction priority of the SR; the power reduction priority of the ACK/NACK is higher than the power reduction priority of the SR; the power reduction priority of the ACK/NACK is lower than the power reduction priority of the SR; when the SR is transmitted jointly with the ACK/NACK on a PUCCH, the power reduction priority of the SR is lower than that of an SR transmitted in a second different form, wherein the second different form is an SR transmission form except the form that the SR is transmitted jointly with the ACK/NACK on the PUCCH; and when the ACK/NACK is transmitted jointly with the SR on the PUCCH, the power reduction priority of the ACK/NACK is lower than that of an ACK/NACK which is independently transmitted and has the same bits.

Wherein, the rule that the power reduction priorities of the ACK/NACK and the SR are determined according to the uncoded bit number of the ACK/NACK includes at least one of the following rules that: when the bit number of the ACK/NACK is not more than a preset number M1, the power reduction priority of the ACK/NACK is not lower than the power reduction priority of the SR, wherein M1 is an integer more than or equal to 0; when the bit number of the ACK/NACK is more than the preset number M1, the power reduction priority of the ACK/NACK is lower than the power reduction priority of the SR; when the bit number of the ACK/NACK is not more than the preset number M1, the power reduction priority of the ACK/NACK is not higher than the power reduction priority of the SR, wherein M1 is an integer more than or equal to 0; and when the bit number of the ACK/NACK is more than the preset number M1, the power reduction priority of the ACK/NACK is higher than the power reduction priority of the SR.

Under the condition that uplink transmission of the UE includes at least one of: a PRACH, UCI, an SRS and uplink data, the preset power reduction rule is a fifth power reduction rule, wherein the UCI includes at least one of: downlink physical CSI, an ACK/NACK for downlink transmission and an uplink SR, and the fifth power reduction rule includes at least one of the following rules that: power reduction priorities are sequentially arranged from high to low as follows: the SRS, the data, the CSI, the ACK/NACK and the PRACH; the power reduction priorities are sequentially arranged from high to low as follows: the SRS, the data, the CSI, the SR and the PRACH; the power reduction priorities are sequentially arranged from high to low as follows: the SRS, the data, the CSI, the PRACH and the ACK/NACK; and the power reduction priorities are sequentially arranged from high to low as follows: the SRS, the data, the CSI, the PRACH and the SR.

Wherein, under the condition that a plurality of UCI are simultaneously transmitted on the same channel, the lowest power reduction priority in power reduction priorities corresponding to the a plurality of UCI may be determined as a power reduction priority of the a plurality of UCI, that is, the a plurality of UCI are preferably processed, or, the highest power reduction priority in the power reduction priorities corresponding to the a plurality of UCI may be determined as the power reduction priority of the a plurality of UCI, that is, the a plurality of UCI are processed after a delay.

Wherein, before the step that the uplink power of the UE is reduced according to the preset power reduction rule, whether transmission of the UCI is at least one of the following scenarios or not may also be judged at first: at least two PUCCHs are transmitted and a PUSCH which bears UCI is not transmitted, at least two PUSCHs which bear UCI are transmitted and a PUCCH is not transmitted, and at least one PUCCH is transmitted and at least one PUSCH with UCI is transmitted; and under the condition that a judgment result is YES, the uplink power of the UE is reduced according to the preset power reduction rule.

In addition, when the uplink power of the UE is reduced according to the preset power reduction rule, multiple processing manners may also be adopted for power reduction, and for example, may include at least one of: discarding without sending, reduction of transmission power, partial reduction of bit numbers and reduction of an allocated uplink resource.

Wherein, under the condition of the same power reduction priority, the step that the uplink power of the UE is reduced according to the preset power reduction rule includes at least one of the following rules that: an ACK/NACK is preferably reduced in a manner of discarding without sending; CSI is preferably reduced in a manner of reducing transmission power to scale; an SR is preferably reduced in the manner of reducing transmission power to scale; and the ACK/NACK, the CSI and the SR are preferably reduced in the manner of reducing the transmission power to scale.

In the embodiment, a processing method for reducing uplink power is further provided, which is applied to a scenario where a plurality of UCI are transmitted on different uplink CCs (which may also be cells) of the same subframe. Fig. 2 is a flowchart of a second uplink power reduction processing method according to an embodiment of the present invention, and as shown in Fig. 2, the method includes the following steps:
Step 202: uplink data sent by UE is received, wherein the uplink data is uplink data obtained after the UE reduces uplink power of the UE according to a preset power reduction rule; and
Step 204: the uplink data is detected in an uplink transmission format, wherein the uplink transmission format may include a first uplink transmission format preset by the UE and one or more second uplink transmission formats except the first uplink transmission format.

Wherein, the step that the uplink data is detected in the uplink transmission format includes that: the uplink data is detected in the first uplink transmission format at first; under the condition that the uplink data is successfully detected in the first uplink transmission format, detection is ended; and/or, under the condition that the uplink data is failed to be detected in the first uplink transmission format, the uplink data is detected in the one or more second uplink transmission formats until detection succeeds. During specific detection, an uplink data sending state of the UE may be assumed at first, for example, it may be assumed that the UE sends the uplink data in a state of not performing power reduction, the uplink transmission format preset by the UE is adopted for detection at first, and if the uplink data is not detected, another uplink transmission format is adopted for detection until detection succeeds; and it may also be assumed that the UE sends the uplink data in a state of performing power reduction, the preset uplink transmission format may also be adopted for detection at first, and if the uplink data is not detected, the other uplink transmission format is adopted for detection until detection succeeds.

The embodiment further provides a processing device for reducing unlink power, which is configured to implement the abovementioned embodiment and preferred implementation mode, and that what has been described will not be elaborated. For example, term "module", used below, is a combination of software and/or hardware capable of realizing a preset function. The device described in the following embodiment is preferably implemented by software, but implementation of the device with hardware or the combination of software and hardware is also possible and conceived.

Fig. 3 is a structure diagram of a first uplink power reduction processing device according to an embodiment of the present invention. As shown in Fig. 3, the device is applied to a scenario where a plurality of UCI are transmitted on different uplink CCs of the same subframe, and includes a determination module 32 and a reduction module 34. The device will be described below.

The determination module 32 is configured to determine that the sum of power of the uplink CCs exceeds a transmission power threshold of UE; and the reduction module 34 is connected to the determination module 32, and is configured to reduce uplink power of the UE according to a preset power reduction rule.

It is important to note that the power reduction rules of the abovementioned uplink power reduction processing method are also applicable to the uplink power reduction processing device, and will not be described one by one.

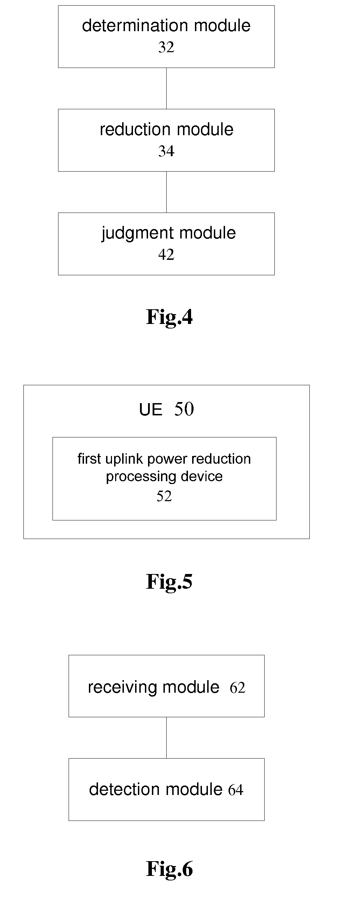

Fig. 4 is a preferred structure diagram of a first uplink power reduction processing device according to an embodiment of the present invention. As shown in Fig. 4, the device further includes, except all the modules shown in Fig. 3, a judgment module 42. The preferred device will be described below.

The judgment module 42 is connected to the determination module 32 and the reduction module 34, and is configured to judge whether transmission of the UCI is at least one of the following scenarios or not: at least two PUCCHs are transmitted and a PUSCH which bears UCI is not transmitted, at least two PUSCHs which bear UCI are transmitted and a PUCCH is not transmitted, and at least one PUCCH is transmitted and at least one PUSCH with UCI is transmitted; and the reduction module is further configured to, under the condition that a judgment result of the judgment module is YES, reduce the uplink power of the UE according to the preset power reduction rule.

Fig. 5 is a structure diagram of UE according to an embodiment of the present invention. As shown in Fig. 5, the UE 50 includes the first uplink power reduction processing device 52 mentioned in any one of the abovementioned items.

In the embodiment, a processing device for reducing unlink power is further provided. Fig. 6 is a structure diagram of a second uplink power reduction processing device according to an embodiment of the present invention. As shown in Fig. 6, the device is applied to a scenario where a plurality of UCI are transmitted on different uplink CCs (which may also be cells) of the same subframe, and the device includes a receiving module 62 and a detection module 64. The device will be described below.

The receiving module 62 is configured to receive uplink data sent by UE, wherein the uplink data is uplink data obtained after the UE reduces uplink power of the UE according to a preset power reduction rule; and the detection module 64 is connected to the receiving module 62, and is configured to detect the uplink data in an uplink transmission format, wherein the uplink transmission format includes a first uplink transmission format preset by the UE and one or more second uplink transmission formats except the first uplink transmission format.

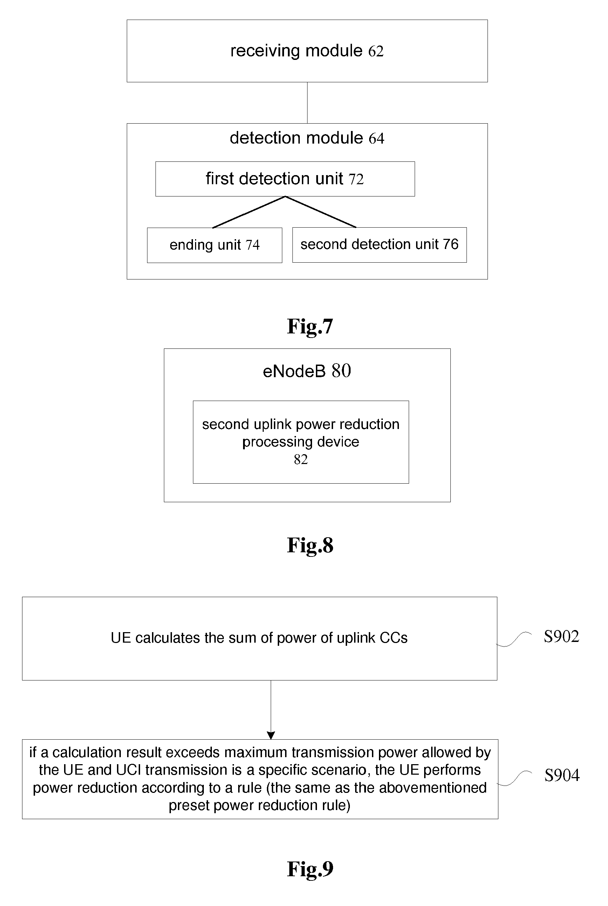

Fig. 7 is a preferred structure diagram of a detection module 64 in a second uplink power reduction processing device according to an embodiment of the present invention. As shown in Fig. 7, the detection module 64 includes a first detection unit 72, an ending unit 74 and/or a second detection unit 76. The detection module 64 will be described below.

The first detection unit 72 is configured to detect the uplink data in the first uplink transmission format; the ending unit 74 is connected to the first detection unit 72, and is configured to, under the condition that the uplink data is successfully detected in the first uplink transmission format, end detection; and/or, the second detection unit 76 is connected to the first detection unit 72, and is configured to, under the condition that the uplink data is failed to be detected in the first uplink transmission format, detect the uplink data in the one or more second uplink transmission formats until detection succeeds.

Fig. 8 is a structure diagram of an eNodeB according to an embodiment of the present invention. As shown in Fig. 8, the eNodeB 80 includes the second uplink power reduction processing device 82 mentioned in any one of the abovementioned items.

By the uplink power reduction processing method and device, UE and eNodeB provided by the abovementioned embodiments and preferred implementation modes, the problem about uplink power reduction control for transmission of the a plurality of UCI on different carriers of the same subframe is solved. It is important to note that the method is applicable to a double link as well as any other uplink transmission scenario in which simultaneous transmission of a plurality of UCI on different carriers of the same subframe is involved, for example: scenarios where multiple PUCCHs are transmitted on the same subframe, and/or multiple PUSCHs which bear UCI are transmitted on the same subframe, and/or the same UCI is simultaneously transmitted on multiple CCs of the same subframe.

The preferred embodiment of the present invention will be described below with reference to scenarios.

In the preferred embodiment, an uplink power reduction control method is provided. Fig. 9 is a flowchart of a first uplink power reduction control method according to a preferred embodiment of the present invention, and as shown in Fig. 9, the method includes the following steps:
Step 902: UE calculates sum of power of uplink CCs; and
Step 904: if a calculation result exceeds maximum transmission power allowed by the UE and UCI transmission is a specific scenario, the UE performs power reduction according to a rule (the same as the abovementioned preset power reduction rule), wherein the specific scenario may be at least one of the following scenarios: at least two PUCCHs are transmitted and a PUSCH which bears UCI is not transmitted; at least two PUSCHs which bear UCI are transmitted and a PUCCH is not transmitted; and at least one PUCCH is transmitted and at least one PUSCH with UCI is transmitted.

The rule includes at least one of:
a first rule: when ACKs/NACKs are transmitted on at least two CCs, the UE performs power reduction on the ACKs/NACKs according to a first priority predefinition;
a second rule: when CSI is transmitted on at least two CCs, the UE performs power reduction according to a second priority predefinition;
a third rule: when SRs are transmitted on at least two CCs, the UE performs power reduction according to a third priority predefinition;
a fourth rule: when an ACK/NACK is transmitted on at least one CC and an SR is transmitted on at least one CC, the UE performs power reduction according to a fourth priority predefinition; and
a fifth rule: power reduction is performed on a PRACH, UCI, an SRS and other uplink data according to a fifth power reduction priority predefinition.

Wherein, in the first rule, when the ACKs/NACKs are transmitted on at least two CCs, the UE performs power reduction on the ACKs/NACKs according to the first priority predefinition. The first priority predefinition includes at least one of the following rules that: priorities are determined according to bit numbers of the ACKs/NACKs; the priorities are determined according to transmission power of the ACKs/NACKs; the priorities are determined according to reporting manners of the ACKs/NACKs; and the priorities are determined according to CC indexes of the CCs with the ACKs/NACKs. Wherein, it is important to note that different subframes may have different predefined priorities.

Wherein, the rule that the priorities are determined according to the bit numbers of the ACKs/NACKs and/or the transmission power of the ACKs/NACKs includes at least one of the following rules that: power reduction is preferably performed on the ACKs/NACKs with smaller bit numbers; power reduction is preferably performed on the ACKs/NACKs with larger bit numbers; power reduction is preferably performed on the ACKs/NACKs with higher transmission power; power reduction is preferably performed on the ACKs/NACKs with lower transmission power; the priorities are determined jointly according to the bit numbers of the ACK/NACKs and the transmission power of the ACK/NACKs: power reduction is preferably performed on the ACKs/NACKs with higher transmission power per bit, the transmission power per bit being obtained by dividing the transmission power of the ACKs/NACKs by the uncoded bit numbers of the ACKs/NACKs; and the priorities are determined jointly according to the bit numbers of the ACKs/NACKs and the transmission power of the ACKs/NACKs: power reduction is preferably performed on the ACKs/NACKs with lower transmission power per bit.

Wherein, the rule that the priorities are determined according to the reporting manners of the ACKs/NACKs includes at least one of: PUCCH format 3≤PUCCH format 1b with channel selection≤PUCCH format 1b≤PUCCH format 1a; or PUCCH format 3≥PUCCH format 1b with channel selection≥PUCCH format 1b≥PUCCH format 1a. The priorities here refer to power reduction priorities, that is, power reduction is preferably performed on the ACKs/NACKs with higher priorities, and the following involved priorities, unless otherwise noted, all refer to power reduction priorities.

Wherein, the rule that the priorities are determined according to the CC indexes of the CCs with the ACKs/NACKs includes at least one of the following rules that: power reduction is preferably performed on the ACKs/NACKs corresponding to large CC indexes; or, power reduction is preferably performed on the ACKs/NACKs corresponding to small CC indexes.

Wherein, the rule that the power reduction priorities are determined according to the CC types of the CCs with the ACKs/NACKs includes at least one of the following rules that: power reduction is preferably performed on the ACKs/NACKs of an SCell; power reduction is preferably performed on the ACKs/NACKs of a cell which accesses the UE later; and power reduction is preferably performed on the ACKs/NACKs of a cell which accesses the UE earlier.

In the second rule, when the CSI is transmitted on at least two CCs, the UE performs power reduction on the CSI according to the second priority predefinition. The second priority predefinition includes at least one of the following rules that: priorities of the CSI are removed according to when an existing PUCCH is only transmitted on a PCell and a plurality of CSI are simultaneously transmitted on the same subframe; the priorities are determined according to uncoded bit numbers of the CSI and/or transmission power of the CSI; and the power reduction priorities of the CSI are the same.

Wherein, the rule that the priorities are determined according to the bit numbers of the CSI and/or the transmission power of the CSI includes at least one of the following rules that: power reduction is preferably performed on the CSI with smaller bit numbers; power reduction is preferably performed on the CSI with larger bit numbers; power reduction is preferably performed on the CSI with higher transmission power; power reduction is preferably performed on the CSI with lower transmission power; the priorities are determined jointly according to the bit numbers of the CSI and the transmission power of the CSI: power reduction is preferably performed on the CSI with higher transmission power per CSI bit, the transmission power per CSI bit being obtained by dividing the transmission power of the CSI by the bit numbers of the CSI; and the priorities are determined jointly according to the bit numbers of the CSI and the transmission power of the CSI: power reduction is preferably performed on the CSI with lower transmission power per CSI bit.

In the third rule, when the SRs are transmitted on at least two CCs, the UE performs power reduction according to the third priority predefinition. The third priority predefinition includes at least one of the following rules that: priorities are determined according to CC indexes of the CCs with the SRs; the priorities are determined according to transmission power of the SRs; and when the SRs are transmitted as MAC PDUs, the power reduction priorities of the SRs are higher than those of SRs transmitted in another form.

Wherein, the rule that the priorities are determined according to the CC indexes of the CCs with the SRs includes at least one of the following rules that: the SRs corresponding to large CC indexes are preferably discarded and not sent or the transmission power is reduced; the SRs corresponding to small CC indexes are preferably discarded and not sent or the transmission power is reduced; and when multiple SRs have the same power reduction priority, the transmission power is reduced according to the same scale factor.

Wherein, the rule that the priorities are determined according to the transmission power of the SRs includes at least one of the following rules that: power reduction is preferably performed on the SRs with higher transmission power; and power reduction is preferably performed on the SRs with lower transmission power.

In the fourth rule, when the ACK/NACK is transmitted on at least one CC and the SR is transmitted on at least one CC, the UE performs power reduction according to the fourth priority predefinition. The fourth priority predefinition includes at least one of the following rules that: priorities are determined according to an uncoded bit number of the ACK/NACK and/or transmission power of the ACK/NACK and the SR; the ACK/NACK and the SR have the same power reduction priority; the power reduction priority of the SR is higher than that of the ACK/NACK; when the SR is transmitted jointly with the ACK/NACK on a PUCCH, the power reduction priority of the SR is lower than that of an SR transmitted in another form; and when the ACK/NACK is transmitted jointly with the SR on the PUCCH, the power reduction priority of the ACK/NACK is lower than that of an ACK/NACK which is independently transmitted.

Wherein, the rule that the priorities are determined according to the bit number of the ACK/NACK and/or the transmission power of the ACK/NACK and the SR includes at least one of the following rules that: when the bit number of the ACK/NACK is less than or equal to M1, the power reduction priority of the ACK/NACK is higher than or equal to that of the SR, wherein M1 is an integer more than 0; when the bit number of the ACK/NACK is more than M1, the power reduction priority of the ACK/NACK is lower than that of the SR; when the bit number of the ACK/NACK is less than or equal to M1, the power reduction priority of the ACK/NACK is lower than or equal to that of the SR; when the bit number of the ACK/NACK is more than M1, the power reduction priority of the ACK/NACK is higher than that of the SR; power reduction is preferably performed on the one with higher transmission power; power reduction is preferably performed on the one with lower transmission power; the priorities are determined jointly according to the bit number and the transmission power: power reduction is preferably performed on the one with higher transmission power per bit, the transmission power per bit being obtained by dividing the transmission power by the uncoded bit number; and the priorities are determined jointly according to the bit number and the transmission power: power reduction is preferably performed on the one with lower transmission power per bit.

In the fifth rule, power reduction is performed on the PRACH, UCI, the SRS and the other uplink data according to the fifth power reduction priority predefinition. The fifth priority predefinition includes at least one of: SRS≥data≥CSI≥ACK/NACK≥ PRACH; or, SRS≥data≥CSI≥SR≥ PRACH; or, SRS≥data≥CSI≥PRACH≥ ACK/NACK; or, SRS≥data≥CSI≥PRACH≥SR.

It is important to note that when a plurality of UCI are simultaneously transmitted on the same channel, a sending priority of the channel is determined by the UCI with the highest sending priority; the content to be noted is that the UCI with higher sending priorities is preferably sent; and
power reduction may include at least one of: discarding without sending, and/or reduction of transmission power, and/or reduction of uncoded bit numbers, and/or reduction of an allocated uplink resource.

Wherein, under the condition of the same priority, a method of discarding without sending is preferably adopted for an ACK/NACK, a method of reducing transmission power to scale is preferably adopted for CSI, and the method of reducing transmission power to scale is preferably adopted for an SR; or, under the condition of the same priority, the method of reducing transmission power to scale is preferably adopted for the ACK/NACK, the CSI and the SR.

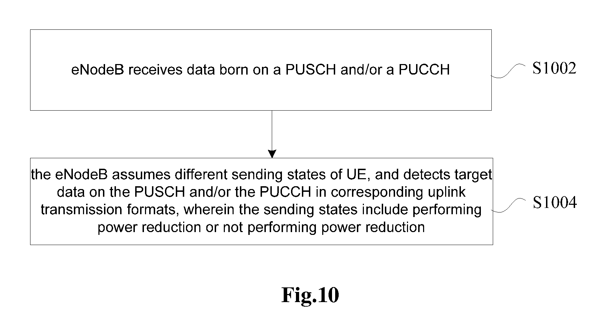

In the preferred embodiment, an uplink power reduction control processing method is also provided. Fig. 10 is a flowchart of a second uplink power reduction control processing according to a preferred embodiment of the present invention, and as shown in Fig. 10, the flow includes the following steps:
Step 1002: an eNodeB receives data born by a PUSCH and/or a PUCCH; and
Step 1004: the eNodeB assumes different sending states of UE, and detects target data on the PUSCH and/or the PUCCH in a corresponding uplink transmission format, wherein the sending state includes performing power reduction or not performing power reduction.

For example, the eNodeB assumes that the UE does not perform power reduction, detects the target data on the PUSCH and/or the PUCCH in a preconfigured uplink transmission format, and successfully detects the target data;
for another example, the eNodeB assumes that the UE does not perform power reduction, and detects the target data on the PUSCH and/or the PUCCH in the preconfigured uplink transmission format; if the target data is not successfully detected, the eNodeB assumes that the UE performs power reduction, performs tentative detection by virtue of other uplink transmission formats one by one until the data is successfully detected; or the eNodeB performs tentative detection by virtue of the other uplink transmission formats one by one, but does not discover the target data.

By applying the uplink power reduction control methods provided by the abovementioned preferred embodiment to the UE and the eNodeB, different protection is provided for different data, and the problem about uplink power reduction control during transmission of the CSI on different CCs is solved.

The preferred implementation mode of the present invention will be described below with application to UE and an eNodeB as examples respectively.

Preferred implementation mode applied to UE

Preferred embodiment 1: ACK/NACK+ACK/NACK

In preferred embodiment 1, it is assumed that UE is configured with two uplink CCs, i.e. CC1 and CC2 respectively. A CC index of CC1 is smaller than a CC index of CC2. Only a PUCCH is transmitted on CC1, and an N1-bit (uncoded) ACK/NACK is born on the PUCCH in PUCCH format 1b; and the PUCCH is transmitted on CC2, and an N2-bit (uncoded) ACK/NACK is born on the PUCCH in PUCCH format 3, wherein N1 and N2 are both positive integers more than 0, and N2>N1. The sum of power of CC1 and CC2 exceeds maximum transmission power allowed by the UE, and the UE selects a rule for power reduction, wherein the rule is:
a first rule: when ACKs/NACKs are transmitted on at least two CCs, the UE performs power reduction on the ACKs/NACKs according to a first priority predefinition.

The UE performs power reduction according to the rule. Since a bit number of the ACK/NACK born on CC2 is more than a bit number of the ACK/NACK born on CC1, the UE discards and does not send the ACK/NACK on CC1. The UE only sends the PUCCH of CC2, and the N2-bit ACK/NACK is born on the PUCCH. Total transmission power meets a requirement, and namely does not exceed total transmission power allowed by the UE. In such a manner, fewer ACK/NACK bits are discarded, and influence on a system is less.

Or, the UE performs power reduction according to the rule. Since the bit number of the ACK/NACK born on CC2 is more than the bit number of the ACK/NACK on CC1, the UE discards and does not send the ACK/NACK on CC2. The UE only sends the PUCCH of CC1, and the N1-bit ACK/NACK is born on the PUCCH. The total transmission power meets the requirement. In such a manner, more ACK/NACK bits are discarded, but more power may be reserved to ensure correct reception of the ACK/NACK on CC2.

Or, the UE performs power reduction according to the rule. Since the bit number of the ACK/NACK born on CC2 is more than the bit number of the ACK/NACK on CC1, the UE reduces the uncoded bit number of the ACK/NACK on CC2 to N3, N3 being a positive integer more than 0 and N3<N2. The UE changes a PUCCH format to send the PUCCH on CC2, and the N3-bit ACK/NACK is born on the PUCCH; and the PUCCH of CC1 is sent, and the N1-bit ACK/NACK is born on the PUCCH. The total transmission power meets the requirement. In such a manner, the CC with a smaller ACK/NACK bit number may also be taken into account, and influence on the CC with a larger ACK/NACK bit number is also less.

The UE performs power reduction according to the rule. Since a power reduction priority of PUCCH format 3 is lower than that of PUCCH format 1b, the UE discards and does not send the ACK/NACK on CC1. The UE only sends the PUCCH on CC2, and the N2-bit ACK/NACK is born on the PUCCH. The total transmission power meets the requirement, and namely does not exceed the total transmission power allowed by the UE. In such a manner, fewer ACK/NACK bits are discarded, and influence on the system is less.

Or, the UE performs power reduction. Since the CC index of CC2 is more than the CC index of CC1, the UE discards and does not send the ACK/NACK on CC1. The UE only sends the PUCCH of CC2, and the N2-bit ACK/NACK is born on the PUCCH. The total transmission power meets the requirement.

Or, the UE performs power reduction according to the rule. Since the CC index of CC2 is more than the CC index of CC1, the UE discards and does not send the ACK/NACK on CC2. The UE only sends the PUCCH of CC1, and the N1-bit ACK/NACK is born on the PUCCH. The total transmission power meets the requirement.

### Preferred embodiment 2: CSI+CSI

In preferred embodiment 2, it is assumed that UE is configured with two uplink CCs, i.e. CC1 and CC2 respectively. There are three scenarios.

### Scenario 1

CC1 and CC2 belong to different serving cells. Only a PUCCH is transmitted on CC1, and CSI is born on the PUCCH in PUCCH reporting type 2; and the PUCCH is transmitted on CC2, and CSI is born on the PUCCH in PUCCH reporting type 3. The sum of power of CC1 and CC2 exceeds maximum transmission power allowed by the UE, and the UE selects a rule for power reduction, wherein the rule is:
a second rule: when CSI is transmitted on at least two CCs, the UE performs power reduction according to a second priority predefinition.

The UE performs power reduction according to the specification in an existing LTE standard 36.213 that priorities of CSI are removed when a PUCCH is only transmitted on a PCell and a plurality of CSI are simultaneously transmitted on the same subframe. In the embodiment, a power reduction priority of PUCCH reporting type 2 is higher than that of PUCCH reporting type 3. The UE reduces transmission power of the CSI on CC1. The UE reduces the power to send the PUCCH on CC1; and the PUCCH on CC2 is sent. Total power meets a requirement.

### Scenario 2

CC1 and CC2 belong to different serving cells. Only a PUCCH is transmitted on CC1, and CSI is born on the PUCCH; and the PUCCH is transmitted on CC2, and CSI is born on the PUCCH. CC1 and CC2 both adopt transmission mode 10 and the same PUCCH reporting type, and csi-Processld-r11 corresponding to a CSI process of CC1 is smaller than that of CC2. The sum of the power of CC1 and CC2 exceeds the maximum transmission power allowed by the UE, and the UE selects a rule for power reduction, wherein the rule is:
the second rule: when CSI is transmitted on at least two CCs, the UE performs power reduction according to a second priority predefinition.

The UE performs power reduction according to the specification in the existing LTE standard 36.213 that priorities of CSI are removed when a PUCCH is only transmitted on a PCell and a plurality of CSI are simultaneously transmitted on the same subframe. In the embodiment, a power reduction priority of a CSI process with smaller csi-Processld-r11 is lower. The UE reduces transmission power of the CSI on CC2. The UE reduces the power to send the PUCCH on CC2; and the PUCCH on CC1 is sent. The total power meets the requirement.

### Scenario 3

CC1 and CC2 belong to different serving cells. Only a PUCCH is transmitted on CC1, and N1-bit CSI is born on the PUCCH; and the PUCCH is transmitted on CC2, and N2-bit CSI is born on the PUCCH, wherein N1 and N2 are both positive integers more than 0, and N1<N2. CC1 and CC2 both adopt transmission mode 10 and the same PUCCH reporting type, csi-Processld-r11 corresponding to CSI processes is the same, but ServCelllndex of CC1 is smaller than ServCelllndex of CC2. The transmission power of CC2 higher than that of CC1, and it is assumed that transmission power per CSI bit of CC2 is lower than transmission power per CSI bit of CC1. The sum of the power of CC1 and CC2 exceeds the maximum transmission power allowed by the UE, and the UE selects a rule for power reduction, wherein the rule is:
the second rule: when CSI is transmitted on at least two CCs, the UE performs power reduction according to a second priority predefinition.

The UE performs power reduction according to the specification in the existing LTE standard 36.213 that priorities of CSI are removed when a PUCCH is only transmitted on a PCell and a plurality of CSI are simultaneously transmitted on the same subframe. In the embodiment, the UE preferably performs power reduction on the CSI of the CC with larger ServCelllndex. The UE reduces the transmission power of the CSI on CC2. The UE sends the PUCCH on CC1, and the N1-bit CSI is born on the PUCCH; and the power is reduced to send the PUCCH on CC2, and the N2-bit CSI is born on the PUCCH. The total power meets the requirement.

Or, the UE performs power reduction. Since a bit number of the CSI born on CC2 is more than a bit number of the CSI born on CC1, the UE reduces the transmission power of the CSI on CC1. The UE reduces the power to send the PUCCH on CC1, and the N1-bit CSI is born on the PUCCH; and the PUCCH on CC2 is sent, and the N2-bit CSI is born on the PUCCH. The total power meets the requirement. In such a manner, fewer CSI bits are influenced by power reduction, and influence on a system is less.

Or, the UE performs power reduction according to the rule. Since the bit number of the CSI born on CC2 is more than the bit number of the CSI on CC1, the UE reduces the transmission power of the CSI on CC2. The UE reduces the power to send the PUCCH on CC2, and the N2-bit CSI is born on the PUCCH; and the PUCCH on CC1 is sent, and the N1-bit CSI is born on the PUCCH. The total power meets the requirement.

Or, the UE performs power reduction according to the rule. Since the transmission power of CC2 is higher than that of CC1, the UE reduces the transmission power of the CSI on CC1. The UE reduces the power to send the PUCCH on CC1, and the N1-bit CSI is born on the PUCCH; and the PUCCH on CC2 is sent, and the N2-bit CSI is born on the PUCCH. The total power meets the requirement. In such a manner, the power may be utilized more effectively.

Or, the UE performs power reduction according to the rule. Since the transmission power of CC2 is higher than that of CC1, the UE reduces the transmission power of the CSI on CC2. The UE reduces the power to send the PUCCH on CC2, and the N2-bit CSI is born on the PUCCH; and the PUCCH on CC1 is sent, and the N1-bit CSI is born on the PUCCH. The total power meets the requirement. In such a manner, the power may be allocated more fairly.

Or, the UE performs power reduction. Since the transmission power per CSI bit of CC2 is lower than the transmission power per CSI bit of CC1, the UE reduces the transmission power of the CSI on CC1. The UE reduces the power to send the PUCCH on CC1, and the N1-bit CSI is born on the PUCCH; and the PUCCH on CC2 is sent, and the N2-bit CSI is born on the PUCCH. The total power meets the requirement. In such a manner, the power may be utilized more effectively, and system throughput may be improved.

### Preferred embodiment 3: SR+SR

In preferred embodiment 3, it is assumed that UE is configured with two uplink CCs, i.e. CC1 and CC2 respectively. A CC index of CC1 is smaller than a CC index of CC2. A PUCCH is transmitted on CC1, and an SR is born on the PUCCH; and the PUCCH is transmitted on CC2, and an SR is born on the PUCCH. The sum of power of CC1 and CC2 exceeds maximum transmission power allowed by the UE, and the UE selects a rule for power reduction, wherein the rule is:
a third rule: when SRs are transmitted on at least two CCs, the UE performs power reduction according to a third priority predefinition. The UE performs power reduction according to the rule. The UE reduces transmission power of the two SRs according to the same scale factor w. Total transmission power meets a requirement. In such a manner, the two SRs may both be sent.

Or, the UE performs power reduction according to the rule. Since the CC index of CC1 is smaller than the CC index of CC2, the UE discards the SR of CC1. The UE only sends the PUCCH of CC2, and the SR is born on the PUCCH. The total transmission power meets the requirement. In such a manner, correct reception of the SR on CC2 may be ensured.

Preferred embodiment 4: Hybrid Automatic Repeat Request (HARQ)+CSI/data/SR

In preferred embodiment, it is assumed that UE is configured with two uplink CCs, i.e. CC1 and CC2 respectively. There are three scenarios.

### Scenario 1

A PUCCH is transmitted on CC1, and an ACK/NACK is born on the PUCCH, and the PUCCH is transmitted on CC2, and CSI is born on the PUCCH. The sum of power of CC1 and CC2 exceeds maximum transmission power allowed by the UE, and the UE selects a rule for power reduction, wherein the rule is:
a fifth rule: power reduction is performed on UCI according to a fifth power reduction priority predefinition, and the fifth priority predefinition is CSI≥ACK/NACK.

The UE performs power reduction according to the rule. The UE reduces transmission power of the CSI on CC2. The UE sends the PUCCH of CC1, and the ACK/NACK is born on the PUCCH; and the transmission power is reduced to send the PUCCH of CC2, and the CSI is born on the PUCCH. Total transmission power meets a requirement. In such a manner, correct reception of the ACK/NACK is ensured.

Or, the UE performs power reduction according to the rule. The UE discards and does not send the CSI on CC2. The UE only sends the PUCCH on CC1, and the ACK/NACK is born on the PUCCH. The total transmission power meets the requirement. In such a manner, correct reception of the ACK/NACK is ensured.

### Scenario 2

A PUCCH is transmitted on CC1, and an ACK/NACK is born on the PUCCH; and the PUSCH is transmitted on CC2, and data is born on the PUSCH. The sum of the power of CC1 and CC2 exceeds the maximum transmission power allowed by the UE, and the UE selects a rule for power reduction, wherein the rule is:
a fifth rule: power reduction is performed on UCI and data according to a fifth power reduction priority predefinition, and the fifth priority predefinition is data≥ ACK/NACK.

The UE performs power reduction according to the rule. The UE reduces transmission power of the data on CC2. The UE sends the PUCCH of CC1, and the ACK/NACK is born on the PUCCH; and the power is reduced to send the PUSCH of CC2, and the data is born on the PUSCH. The total transmission power meets the requirement. In such a manner, correct reception of the ACK/NACK is ensured.

### Scenario 3

A PUCCH is transmitted on CC1, and an N1-bit ACK/NACK is born on the PUCCH, wherein N1 is a positive integer more than 0, and N1<M1; and the PUCCH is transmitted on CC2, and an SR is born on the PUCCH. The sum of the power of CC1 and CC2 exceeds the maximum transmission power allowed by the UE, and the UE selects a rule for power reduction, wherein the rule is:
a fourth rule: when an ACK/NACK is transmitted on at least one CC and an SR is transmitted on at least one CC, the UE performs power reduction according to a fourth priority predefinition.

The UE performs power reduction according to the rule. The UE discards and does not send the SR on CC2. The UE only sends the PUCCH of CC1, and the ACK/NACK is born on the PUCCH. The total transmission power meets the requirement. In such a manner, correct reception of the ACK/NACK is ensured.

Or, the UE performs power reduction according to the rule. Since an uncoded bit number N1 of the ACK/NACK on CC1 is smaller than M1, the UE discards and does not send the ACK/NACK on CC1. The UE only sends the PUCCH of CC2, and the SR is born on the PUCCH. In such a manner, correct reception of the SR is ensured, and influence on CC1 is less. The total transmission power meets the requirement.

### Preferred embodiment 5: HARQ+HARQ and CSI/data/SR

In preferred embodiment 5, it is assumed that UE is configured with two uplink CCs, i.e. CC1 and CC2 respectively. There are four scenarios.

### Scenario 1

A PUCCH is transmitted on CC1, and an N1-bit (uncoded) ACK/NACK is born on the PUCCH; and the PUCCH is transmitted on CC2, and an N2-bit (uncoded) ACK/NACK and N3-bit CSI are born on the PUCCH, wherein N1, N2 and N3 are all positive integers more than 0, and N2>N1. The sum of power of CC1 and CC2 exceeds maximum transmission power allowed by the UE, and the UE selects rules for power reduction, wherein the rules are:
a first rule: when ACKs/NACKs are transmitted on at least two CCs, the UE performs power reduction on the ACKs/NACKs according to a first priority predefinition; and
a fifth rule: power reduction is performed on UCI according to a fifth power reduction priority predefinition, and the fifth priority predefinition is CSI≥ACK/NACK.

The UE performs power reduction according to the rules. The UE discards and does not send the CSI on CC2. The UE sends the PUCCH of CC1, and the N1-bit ACK/NACK is born on the PUCCH; and a PUCCH format is changed to send the PUCCH of CC2, and the N2-bit ACK/NACK is born on the PUCCH. Total transmission power meets a requirement. In such a manner, correct reception of the ACK/NACK is ensured.

Or, the UE performs power reduction according to the rules. The UE discards and does not send the CSI on CC2, and since N1>N1, the UE further discards and does not send the ACK/NACK on CC1. The UE changes the PUCCH format to send the PUCCH of CC2, and the N2-bit ACK/NACK is born on the PUCCH. The total transmission power meets the requirement. In such a manner, correct reception of the ACK/NACK on CC2 is ensured, and in addition, influence on CC1 is less.

Or, the UE performs power reduction according to the rules. The UE discards and does not send the CSI on CC2, and since N2>N1, the UE further discards and does not send the ACK/NACK on CC2. The UE sends the PUCCH of CC1, and the N1-bit ACK/NACK is born on the PUCCH. The total transmission power meets the requirement. In such a manner, more power may be reserved to the ACK/NACK on CC1 to ensure its correct reception.

### Scenario 2

A PUCCH is transmitted on CC1, and an N1-bit (uncoded) ACK/NACK is born on the PUCCH; and the PUCCH and a PUSCH are simultaneously transmitted on CC2, an N2-bit (uncoded) ACK/NACK is born on the PUCCH, and N3-bit data is born on the PUSCH, wherein N1, N2 and N3 are all positive integers more than 0, and N2>N1. The sum of the power of CC1 and CC2 exceeds the maximum transmission power allowed by the UE, and the UE selects rules for power reduction, wherein the rules are:
a fifth rule: when ACKs/NACKs are transmitted on at least two CCs, the UE performs power reduction on the ACKs/NACKs according to a first priority predefinition; and
a fifth rule: power reduction is performed on UCI and data according to a fifth power reduction priority predefinition, and the fifth priority predefinition is data≥ ACK/NACK.

The UE performs power reduction according to the rules. The UE reduces transmission power of the data on CC2. The UE sends the PUCCH of CC1, and the N1-bit ACK/NACK is born on the PUCCH; and the PUCCH and PUSCH of CC2 are simultaneously sent, the N2-bit ACK/NACK is born on the PUCCH, and the data of which the transmission power is reduced is born on the PUSCH. The total transmission power meets the requirement. In such a manner, correct reception of the ACKs/NACKs is ensured.

Or, the UE performs power reduction according to the rules. The UE discards and does not send the data on CC2, and since N2>N1, the UE further discards and does not send the ACK/NACK on CC1. The UE only sends the PUCCH of CC2, and the N2-bit ACK/NACK is born on the PUCCH. The total transmission power meets the requirement. In such a manner, correct reception of the ACK/NACK on CC2 is ensured, and in addition, influence on CC1 is less.

Or, the UE performs power reduction according to the rules. The UE discards and does not send the data on CC2, and since N2>N1, the UE further discards and does not send the ACK/NACK on CC2. The UE only sends the PUCCH of CC1, and the N1-bit ACK/NACK is born on the PUCCH. The total transmission power meets the requirement. In such a manner, more power may be reserved to the ACK/NACK on CC1 to ensure its correct reception.

Or, the UE performs power reduction according to the rules. The UE discards and does not send the data on CC2, and since N2>N1, the UE further reduces a bit number of the ACK/NACK on CC2 to N3, and N3<N2. The UE sends the PUCCH of CC1, and the N1-bit ACK/NACK is born on the PUCCH; and a PUCCH format is changed to send the PUCCH of CC2, and the N3-bit ACK/NACK is born on the PUCCH. The total transmission power meets the requirement. In such a manner, correct reception of the ACKs/NACKs on CC1 and CC2 are simultaneously taken into account, and influence on CC2 is less.

### Scenario 3

A PUCCH is transmitted on CC1, and an N1-bit ACK/NACK is born on the PUCCH; and the PUCCH is transmitted on CC2, and an N2-bit ACK/NACK and an SR are born on the PUCCH, wherein, N1 and N2 are both positive integers more than 0, and N1>M1>N2. The sum of the power of CC1 and CC2 exceeds the maximum transmission power allowed by the UE, and the UE selects rules for power reduction, wherein the rules are:
a first rule: when ACKs/NACKs are transmitted on at least two CCs, the UE performs power reduction on the ACKs/NACKs according to a first priority predefinition; and
a fourth rule: when an ACK/NACK is transmitted on at least one CC and an SR is transmitted on at least one CC, the UE performs power reduction according to a fourth priority predefinition.

The UE performs power reduction according to the rules. The UE discards and does not send the SR on CC2. The UE sends the PUCCH of CC1, and the N1-bit ACK/NACK is born on the PUCCH; and the PUCCH of CC2 is sent, and the N2-bit ACK/NACK is born on the PUCCH. The total transmission power meets the requirement. In such a manner, correct reception of the ACKs/NACKs is ensured.

Or, the UE performs power reduction according to the rules. The rule for the UE to refer to is that: when an ACK/NACK is transmitted jointly with an SR on a PUCCH, a power reduction priority of the ACK/NACK is lower than an ACK/NACK which is independently transmitted. Since the ACK/NACK and SR on CC2 are jointly transmitted, the UE discards and does not send the ACK/NACK on CC1. The UE only sends the PUCCH of CC2, and the N2-bit ACK/NACK and the SR are born on the PUCCH. The total transmission power meets the requirement.

Or, rules for the UE to refer to are that: when an uncoded bit number of an ACK/NACK is less than or equal to M1, a power reduction priority of the ACK/NACK is higher than or equal to that of an SR; and when the bit number of the ACK/NACK is more than M1, the power reduction priority of the ACK/NACK is lower than that of the SR. Since N2 is smaller than M1 and N1 is more than M1, the UE discards and does not send the ACK/NACK on CC2. The UE only sends the PUCCH of CC1, and the N1-bit ACK/NACK is born on the PUCCH; and the PUCCH of CC2 is sent, and the SR is born on the PUCCH. The total transmission power meets the requirement. In such a manner, the ACK/NACK with a smaller bit number is reduced, thereby ensuring correct reception of the SR and the ACK/NACK with a larger bit number.

### Scenario 4

A PUCCH is transmitted on CC1, and an N1-bit (uncoded) ACK/NACK is born on the PUCCH; and the PUCCH is transmitted on CC2, and an N2-bit (uncoded) ACK/NACK and N3-bit CSI are born on the PUCCH, wherein N1, N2 and N3 are all positive integers more than 0, and N2>N1. The sum of the power of CC1 and CC2 exceeds the maximum transmission power allowed by the UE, and the UE selects a rule for power reduction, wherein the rule is that:
when a plurality of UCI are simultaneously transmitted on the same channel, a sending priority of the channel is determined by the UCI with the highest sending priority.

The UE performs power reduction according to the rule. The UE determines a power reduction priority of the PUCCH according to the ACK/NACK with the highest priority on the PUCCH. Since N2>N1, the UE discards and does not send the PUCCH on CC1. The UE only sends the PUCCH of CC2, and the N2-bit ACK/NACK and the N3-bit CSI are born on the PUCCH. The total transmission power meets the requirement.

### Preferred embodiment 6: SR+SR and HARQ/data

In preferred embodiment 6, it is assumed that UE is configured with two uplink CCs, i.e. CC1 and CC2 respectively. There are three scenarios.

### Scenario 1

A PUCCH is transmitted on CC1, and an SR is born on the PUCCH; and the PUCCH is transmitted on CC2, and an N1-bit ACK/NACK and an SR are born on the PUCCH, wherein N1 is a positive integer more than 0, and N1<M1. The sum of power of CC1 and CC2 exceeds maximum transmission power allowed by the UE, and the UE selects a rule for power reduction, wherein the rule is:
a fourth rule: when an ACK/NACK is transmitted on at least one CC and an SR is transmitted on at least one CC, the UE performs power reduction according to a fourth priority predefinition.

The UE performs power reduction according to the rule. The rule for the UE to refer to is that: a power reduction priority of an SR is higher than that of an ACK/NACK; and when an SR is transmitted jointly with an ACK/NACK on a PUCCH, a power reduction priority of the ACK/NACK is lower than that of an SR which is independently transmitted. The UE discards and does not send the SR on CC1. The UE sends the PUCCH of CC2, and the N1-bit ACK/NACK and the SR are born on the PUCCH. Total transmission power meets a requirement. In such a manner, correct reception of the ACK/NACK is ensured.

The UE performs power reduction according to the rule. The rule for the UE to refer to is that: when an uncoded bit number of an ACK/NACK is less than or equal to M1, a power reduction priority of the ACK/NACK is higher than or equal to that of an SR. The UE discards and does not send the ACK/NACK on CC2. The UE sends the PUCCH of CC1, and the SR is born on the PUCCH; and the PUCCH of CC2 is sent, and the SR is born on the PUCCH. The total transmission power meets the requirement. In such a manner, a small number of ACK/NACK bits are discarded, influence is little, and correct reception of the SRs is ensured.

### Scenario 2

A PUCCH is transmitted on CC1, and an SR is born on the PUCCH; and a PUSCH is transmitted on CC2, data is born on the PUSCH, and in addition, the SR is send as a MAC PDU. The sum of the power of CC1 and CC2 exceeds the maximum transmission power allowed by the UE, the UE selects rules for power reduction, wherein the rules are:
a third rule: when SRs are transmitted on at least two CCs, the UE performs power reduction according to a third priority predefinition; and
a fifth rule: power reduction is performed on an SR and data according to a fifth power reduction priority predefinition, and the fifth priority predefinition is data≥SR. The UE performs power reduction according to the rules. The rule for the UE to refer to is that: when an SR is transmitted as a MAC PDU, a power reduction priority of the SR is higher than an SR which is transmitted in another form. The UE reduces transmission power of data and SR on CC2 by virtue of a scale factor w. The UE sends the PUCCH on CC1, and the SR is born on the PUCCH; and the transmission power is reduced to send the PUSCH on CC2, the data is born on the PUSCH, and the SR is sent as a MAC PDU.

### Embodiment of eNodeB to which the Method is applied

### Preferred embodiment 7

In preferred embodiment 7, it is assumed that UE is configured with two uplink CCs, i.e. CC1 and CC2 respectively. Only a PUCCH is transmitted on CC1, and an N1-bit ACK/NACK is born on the PUCCH in PUCCH format 1b; and the PUCCH is transmitted on CC2, and an N2-bit ACK/NACK is born on the PUCCH in PUCCH format 3, wherein N1 and N2 are both positive integers more than 0, and N2>N1. The sum of power of CC1 and CC2 exceeds maximum transmission power allowed by the UE, and UE discards and does not send the ACK/NACK on CC1, and only sends the PUCCH of CC2.

An eNodeB receives data born on CC1 and CC2; and
the eNodeB performs blind detection. For CC1, the eNodeB detects the PUCCH in a preconfigured uplink transmission format, i.e. PUCCH format 1b; the eNodeB does not detect target data, performs tentative detection by virtue of other uplink transmission formats one by one, but does not discover the target data; and the eNodeB successfully detects the PUCCH on CC2 in PUCCH format 3.

### Preferred embodiment 8

In preferred embodiment 8, UE is configured with two uplink CCs, i.e. CC1 and CC2 respectively. A PUCCH is transmitted on CC1, and an ACK/NACK is born on the PUCCH in PUCCH format 1b; and the PUCCH is transmitted on CC2, and an ACK/NACK and CSI are born on the PUCCH in PUCCH format 2b. The sum of power of CC1 and CC2 exceeds maximum transmission power allowed by the UE, and the UE discards and does not send the CSI on CC2. The UE sends the PUCCH of CC1, and the ACK/NACK is born on the PUCCH; and the PUCCH of CC2 is sent, and the ACK/NACK is born on the PUCCH in PUCCH format 1 b.

An eNodeB receives data born on CC1 and CC2; and
the eNodeB performs blind detection. For CC1, the eNodeB successfully detects the ACK/NACK on the PUCCH in a preconfigured uplink transmission format, i.e. PUCCH format 1b; and for CC2, the eNodeB detects the PUCCH in a preconfigured uplink transmission format, i.e. PUCCH format 2b, the eNodeB does not detect target data, performs tentative detection by virtue of other uplink transmission formats one by one, and successfully detects the ACK/NACK of the PUCCH on CC2 in PUCCH format 1 b.

By applying the uplink power reduction control methods provided by the abovementioned preferred implementation modes to the UE and the eNodeB, different protection is provided for different data, and the problem about uplink power reduction control during transmission of the UCI on different CCs is solved.

Obviously, those skilled in the art should know that each module or step of the present invention may be implemented by a universal computing device, and the modules or steps may be concentrated on a single computing device or distributed on a network formed by a plurality of computing devices, and may optionally be implemented by program codes executable for the computing devices, so that the modules or steps may be stored in a storage device for execution with the computing devices, the shown or described steps may be executed in a sequence different from that described here under certain circumstances, or the modules or steps may form each integrated circuit module respectively, or multiple modules or steps therein may form a single integrated circuit module for implementation. As a consequence, the present invention is not limited to any specific hardware and software combination.

The above is only the preferred embodiment of the present invention and not intended to limit the present invention, and for those skilled in the art, the present invention may have various modifications and variations. Any modifications, equivalent replacements, improvements and the like within the spirit and principle of the present invention shall fall within the scope of protection of the present invention.

## Claims

1. A processing method for reducing uplink power, which is applied to a scenario where a plurality of Uplink Control Information (UCI) are transmitted on different uplink Component Carriers (CCs) of the same subframe, comprising:
determining that the sum of power of the uplink CCs exceeds a transmission power threshold of User Equipment (UE); and
reducing uplink power of the UE according to a preset power reduction rule.

2. The method according to claim 1, wherein, under the condition that Acknowledgements/Negative Acknowledgements (ACKs/NACKs) for downlink transmission are transmitted on at least two CCs, the preset power reduction rule is a first power reduction rule, wherein the first power reduction rule comprises at least one of the following rules that:
power reduction priorities are determined based on bit numbers of the ACKs/NACKs;
power reduction priorities are determined based on transmission power of the ACKs/NACKs;
power reduction priorities are determined based on reporting manners of the ACKs/NACKs;
power reduction priorities are determined based on indexes of the CCs on which the NACKs/NACKs are located; and
power reduction priorities are determined based on types of the CCs on which the ACKs/NACKs located.

3. The method according to claim 2, wherein the rule that the power reduction priorities are determined based on the bit numbers of the ACKs/NACKs and/or the transmission power of the ACKs/NACKs comprises at least one of the following:
power reduction is preferably performed on the ACKs/NACKs with smaller bit numbers;
power reduction is preferably performed on the ACKs/NACKs with larger bit numbers;
power reduction is performed on the ACKs/NACKs with the same bit number according to the same scale factor;
power reduction is preferably performed on the ACKs/NACKs with higher transmission power;
power reduction is preferably performed on the ACKs/NACKs with lower transmission power;
power reduction is performed on the ACKs/NACKs with the same transmission power according to the same scale factor;
power reduction is preferably performed on the ACKs/NACKs with higher transmission power per bit, wherein the transmission power per bit is obtained by dividing the transmission power of the ACKs/NACKs by the bit numbers of the ACKs/NACKs; and
power reduction is preferably performed on the ACKs/NACKs with lower transmission power per bit.

4. The method according to claim 2, wherein the rule that the power reduction priorities are determined based on the reporting manners of the ACKs/NACKs comprises at least one of the following:
the power reduction priorities are sequentially arranged from high to low as follows: Physical Uplink Control Channel (PUCCH) format 1a, PUCCH format 1b, PUCCH format 1 b with channel selection, and PUCCH format 3; and
the power reduction priorities are sequentially arranged from high to low as follows: PUCCH format 3, PUCCH format 1 b with channel selection, PUCCH format 1 b, and PUCCH format 1 a.

5. The method according to claim 2, wherein the rule that the power reduction priorities are determined based on the indexes of the CCs on which the ACKs/NACKs are located comprises at least one of the following:
power reduction is preferably performed on the ACKs/NACKs corresponding to larger CC indexes;
power reduction is preferably performed on the ACKs/NACKs corresponding to smaller CC indexes; and
power reduction is performed on the ACKs/NACKs corresponding to the same CC index according to the same scale factor.

6. The method according to claim 2, wherein the rule that the power reduction priorities are determined based on the types of the CCs on which the ACKs/NACKs are located comprises at least one of the following:
power reduction is preferably performed on the ACKs/NACKs of a Secondary Cell (SCell);
power reduction is preferably performed on the ACKs/NACKs of a cell which accessed by the UE later; and
power reduction is preferably performed on the ACKs/NACKs of a cell which accessed by the UE earlier.

7. The method according to claim 1, wherein, under the condition that downlink physical Channel State Information (CSI) is transmitted on at least two CCs, the preset power reduction rule is a second power reduction rule, wherein the second power reduction rule comprises at least one of the following:
power reduction priorities are determined according to priorities that CSI are removed when a PUCCH is transmitted only on a PCC and a plurality of CSI are simultaneously transmitted on the same subframe;
the power reduction priorities are determined according to bit numbers of the CSI; and
the power reduction priorities are determined according to transmission power of the CSI.

8. The method according to claim 7, wherein the rule that the power reduction priorities are determined according to the bit numbers of the CSI and/or the transmission power of the CSI comprises at least one of the following rules that:
power reduction is preferably performed on the CSI with smaller bit numbers;
power reduction is preferably performed on the CSI with larger bit numbers;
power reduction is performed on the CSI with the same bit number according to the same scale factor;
power reduction is preferably performed on the CSI with higher transmission power;
power reduction is preferably performed on the CSI with lower transmission power;
power reduction is performed on the CSI with the same transmission power according to the same scale factor;
power reduction is preferably performed on the CSI with higher transmission power per CSI bit, wherein the transmission power per CSI bit is obtained by dividing the transmission power of the CSI by the bit numbers of the CSI ; and
power reduction is preferably performed on the CSI with lower transmission power per CSI bit.

9. The method according to claim 1, wherein, under the condition that uplink Scheduling Requests (SRs) are transmitted on at least two CCs, the preset power reduction rule is a third power reduction rule, wherein the third power reduction rule comprises at least one of the following:
power reduction priorities are determined according to indexes of the CCs on which the SRs are located;
the power reduction priorities are determined according to transmission power of the SRs; and
when the SRs are transmitted as Media Access Control (MAC) Protocol Data Units (PDUs), the power reduction priorities of the SRs are higher than those of SRs transmitted in a first different form, wherein the first different form is an SR transmission form except the form that the SRs are transmitted as the MAC PDUs.

10. The method according to claim 9, wherein the rule that the power reduction priorities are determined according to the indexes of the CCs on which the SRs are located comprises at least one of the following:
power reduction is preferably performed on the SRs corresponding to larger CC indexes;
power reduction is preferably performed on the SRs corresponding to smaller CC indexes; and
power reduction is performed on the SRs corresponding to the same CC index according to the same scale factor.

11. The method according to claim 9, wherein the rule that the power reduction priorities are determined according to the transmission power of the SRs comprises at least one of the following rules that:
power reduction is preferably performed on the SRs with higher transmission power;
power reduction is preferably performed on the SRs with lower transmission power; and
power reduction is performed on the SRs with the same transmission power according to the same scale factor.

12. The method according to claim 1, wherein, under the condition that an ACK/NACK is transmitted on at least one CC and an uplink SR is transmitted on at least one CC, the preset power reduction rule is a fourth power reduction rule, wherein the fourth power reduction rule comprises at least one of the following:
power reduction priorities of the ACK/NACK and the SR are determined according to a bit number of the ACK/NACK;
power reduction is preferably performed on the one with higher transmission power between the ACK/NACK and the SR;
power reduction is preferably performed on the one with lower transmission power between the ACK/NACK and the SR;
power reduction is preferably performed on the one with higher transmission power per bit between the ACK/NACK and the SR, wherein the transmission power per bit of the ACK/NACK is obtained by dividing transmission power of the ACK/NACK by the bit number of the ACK/NACK, and the transmission power per bit of the SR is obtained by dividing transmission power of the SR by the bit number of the SR ;
power reduction is preferably performed on the one with lower transmission power per bit between the ACK/NACK and the SR;
the power reduction priority of the ACK/NACK is the same as the power reduction priority of the SR;
the power reduction priority of the ACK/NACK is higher than the power reduction priority of the SR;
the power reduction priority of the ACK/NACK is lower than the power reduction priority of the SR;
when the SR is transmitted jointly with the ACK/NACK on a PUCCH, the power reduction priority of the SR is lower than that of an SR transmitted in a second different form, wherein the second different form is an SR transmission form except the form that the SR is transmitted jointly with the ACK/NACK on the PUCCH; and
when the ACK/NACK is transmitted jointly with the SR on the PUCCH, the power reduction priority of the ACK/NACK is lower than that of an ACK/NACK which is independently transmitted and has the same bits.

13. The method according to claim 12, wherein the rule that the power reduction priorities of the ACK/NACK and the SR are determined according to the uncoded bit number of the ACK/NACK comprises at least one of the following rules that:
when the bit number of the ACK/NACK is not more than a preset number M1, the power reduction priority of the ACK/NACK is not lower than the power reduction priority of the SR, wherein M1 is an integer more than or equal to 0; when the bit number of the ACK/NACK is more than the preset number M1, the power reduction priority of the ACK/NACK is lower than the power reduction priority of the SR;
when the bit number of the ACK/NACK is not more than the preset number M1, the power reduction priority of the ACK/NACK is not higher than the power reduction priority of the SR, wherein M1 is an integer more than or equal to 0; and when the bit number of the ACK/NACK is more than the preset number M1, the power reduction priority of the ACK/NACK is higher than the power reduction priority of the SR.

14. The method according to claim 1, wherein, under the condition that uplink transmission of the UE comprises at least one of: a Physical Random Access Channel (PRACH), UCI, a Sounding Reference Signal (SRS) and uplink data, the preset power reduction rule is a fifth power reduction rule, wherein the UCI comprises at least one of: downlink physical CSI, an ACK/NACK for downlink transmission and an uplink SR, and the fifth power reduction rule comprises at least one of the following rules that:
power reduction priorities are sequentially arranged from high to low as follows: the SRS, the data, the CSI, the ACK/NACK and the PRACH;
the power reduction priorities are sequentially arranged from high to low as follows: the SRS, the data, the CSI, the SR and the PRACH;
the power reduction priorities are sequentially arranged from high to low as follows: the SRS, the data, the CSI, the PRACH and the ACK/NACK; and
the power reduction priorities are sequentially arranged from high to low as follows: the SRS, the data, the CSI, the PRACH and the SR.

15. The method according to any one of claims 1 to 14, wherein, under the condition that a plurality of UCI are simultaneously transmitted on the same channel, the lowest power reduction priority in power reduction priorities corresponding to the a plurality of UCI is determined as a power reduction priority of the a plurality of UCI, or, the highest power reduction priority in the power reduction priorities corresponding to the a plurality of UCI is determined as the power reduction priority of the a plurality of UCI.

16. The method according to any one of claims 1 to 14, before reducing the uplink power of the UE according to the preset power reduction rule, further comprising:
judging whether transmission of the UCI is at least one of the following scenarios or not: at least two PUCCHs are transmitted and a Physical Uplink Shared Channel (PUSCH) which bears UCI is not transmitted, at least two PUSCHs which bear UCI are transmitted and a PUCCH is not transmitted, and at least one PUCCH is transmitted and at least one PUSCH with UCI is transmitted; and
under the condition that a judgment result is YES, reducing the uplink power of the UE according to the preset power reduction rule.

17. The method according to any one of claims 1 to 14, wherein reducing the uplink power of the UE according to the preset power reduction rule comprises at least one of:
discarding without sending, reduction of transmission power, partial reduction of bit numbers and reduction of an allocated uplink resource.

18. The method according to claim 17, wherein, under the condition of the same power reduction priority, the step that the uplink power of the UE is reduced according to the preset power reduction rule comprises at least one of:
preferably reducing an ACK/NACK in a manner of discarding without sending;
preferably reducing CSI in a manner of reducing transmission power to scale;
preferably reducing an SR in the manner of reducing transmission power to scale; and
preferably reducing the ACK/NACK, the CSI and the SR in the manner of reducing the transmission power to scale.

19. A processing method for reducing uplink power, which is applied to a scenario where a plurality of Uplink Control Information (UCI) are transmitted on different uplink Component Carriers (CCs) of the same subframe, comprising:
receiving uplink data sent by User Equipment (UE), wherein the uplink data is uplink data obtained after the UE reduces uplink power of the UE according to a preset power reduction rule; and
detecting the uplink data in an uplink transmission format, wherein the uplink transmission format comprises a first uplink transmission format preset by the UE and one or more second uplink transmission formats except the first uplink transmission format.

20. The method according to claim 19, wherein detecting the uplink data in the uplink transmission format comprises:
detecting the uplink data in the first uplink transmission format;
under the condition that the uplink data is successfully detected in the first uplink transmission format, detection is ended; and/or, under the condition that the uplink data is failed to be detected in the first uplink transmission format, the uplink data is detected in the one or more second uplink transmission formats until detection succeeds.

21. A processing device for reducing unlink power, applied to a scenario where a plurality of Uplink Control Information (UCI) are transmitted on different uplink Component Carriers (CCs) of the same subframe, comprising:
a determination module, configured to determine that the sum of power of the uplink CCs exceeds a transmission power threshold of User Equipment (UE); and
a reduction module, configured to reduce uplink power of the UE according to a preset power reduction rule.

22. The device according to claim 21, further comprising:
a judgment module, configured to judge whether transmission of the UCI is at least one of the following scenarios or not: at least two PUCCHs are transmitted and a PUSCH which bears UCI is not transmitted, at least two PUSCHs which bear UCI are transmitted and a PUCCH is not transmitted, and at least one PUCCH is transmitted and at least one PUSCH with UCI is transmitted, wherein
the reduction module is further configured to, under the condition that a judgment result of the judgment module is YES, reduce the uplink power of the UE according to the preset power reduction rule.

23. User Equipment (UE), comprising the device according to any one of claims 21 to 22.

24. A processing device for reducing unlink power, which is applied to a scenario where a plurality of Uplink Control Information (UCI) are transmitted on different uplink Component Carriers (CCs) of the same subframe, comprising:
a receiving module, configured to receive uplink data sent by User Equipment (UE), wherein the uplink data is uplink data obtained after the UE reduces uplink power of the UE according to a preset power reduction rule; and
a detection module, configured to detect the uplink data in an uplink transmission format, wherein the uplink transmission format comprises a first uplink transmission format preset by the UE and one or more second uplink transmission formats except the first uplink transmission format.

25. The device according to claim 24, wherein the detection module comprises:
a first detection unit, configured to detect the uplink data in the first uplink transmission format;
an ending unit, configured to, under the condition that the uplink data is successfully detected in the first uplink transmission format, end detection; and/or, a second detection unit, configured to, under the condition that the uplink data is failed to be detected in the first uplink transmission format, detect the uplink data in the one or more second uplink transmission formats until detection succeeds.

26. An Evolved Node B (eNodeB), comprising the device according to any one of claims 24 to 25.
